# EUROPÄISCHE PATENTSCHRIFT

(11) **EP 1 198 855 B1**
(45) Veröffentlichungstag und Bekanntmachung des Hinweises auf die Patenterteilung: **17.11.2004**
(21) Anmeldenummer: 00931077.2
(22) Anmeldetag: 27.04.2000
(51) Int. Cl.: H01M 4/24, H01M 4/06

(54) **GEMISCH AUS ZINK UND/ODER ZINKLEGIERUNGSTEILCHEN UND EINEM FLÜSSIGEN MEDIUM SOWIE VERFAHREN ZUR HERSTELLUNG DESSELBEN**
MIXTURE COMPRISING ZINC AND/OR ZINC ALLOY PARTICLES AND A LIQUID MEDIUM AND A METHOD FOR PRODUCING THE SAME
MELANGE DE PARTICULES DE ZINC OU D'ALLIAGES DE ZINC ET D'UN MILIEU LIQUIDE, AINSI QUE PROCEDE DE PRODUCTION DE CE MELANGE

(30) Priorität: 01.06.1999 DE 19925048
(43) Veröffentlichungstag der Anmeldung: 24.04.2002
(73) Patentinhaber: Grillo-Werke AG, D-47169 Duisburg (DE)
(72) Erfinder: GLAESER, Wolfgang, D-38640 Goslar (DE)
(74) Vertreter: Werner, Hans-Karsten, Dr.Dipl.-Chem.
(86) Internationale Anmeldenummer: PCT/EP2000/003799
(87) Internationale Veröffentlichungsnummer: WO 2000/074157

(56) Entgegenhaltungen:
- DE-A- 3 238 240
- US-A- 4 172 924
- US-A- 5 716 726

## Beschreibung

Gegenstand der vorliegenden Erfindung ist ein Gemisch aus Metall- und/oder Legierungsteilchen und einem flüssigen elektrolytischen Medium sowie Verfahren zur Herstellung desselben. Derartige Gemische sind bekannt und werden zu verschiedenen Zwecken verwendet, wobei besonders bedeutungsvoll solche Gemische sind, bei denen die Metall- und/oder Legierungsteilchen sich in dem flüssigen elektrolytischen Medium auflösen können und dabei elektrischen Strom abgeben können. Es handelt sich somit insbesondere um Gemische von Metalloder Legierungsteilchen, bei denen die Teilchen sich in einer Säure oder Lauge auflösen können. Diese chemischen Reaktionen werden in erheblichem Umfang verwertet zur Herstellung von elektrischem Strom, beispielsweise in Batterien und Akkumulatoren, d.h. wiederaufladbaren Batterien.

Ein sehr häufig eingesetztes Gemisch besteht aus Zinkteilchen oder Teilchen einer Zinklegierung und Lösungen von Alkali als flüssigem elektrolytischen Medium. Diese Gemische werden beispielsweise eingesetzt zusammen mit Gemischen von Mangandioxid mit Anteilen eines flüssigen elektrolytischen Mediums, wobei die beiden Gemische meist durch einen Separator voneinander getrennt sind. Die Teilchen aus Zink oder Zinklegierungen werden nach verschiedenen bekannten Methoden aus flüssigem Zink oder flüssigen Zinklegierungen hergestellt, beispielsweise durch Verdüsen oder Granulieren auf einem rotierenden Granulierteller. Je nach Verfahrensbedingungen lassen sich die Korngrößen, die Korngrößenverteilung und die äußeren Formen der Teilchen einstellen, wobei häufig Siebfraktionen von Überkom und Unterkorn abgetrennt werden.

Aus der W099/07030 ist bekannt, den an sich bekannten Teilchen aus Zink oder Zinklegierungen gezielt mehr oder weniger Feinstkorn zuzumischen, da hierdurch die Empfindlichkeit gegen mechanische Stöße herabgesetzt werden soll. Es wird vermutet, dass diese Eigenschaften darauf zurückzuführen sind, dass ein günstigeres Verhältnis zwischen Volumen und Oberfläche der Teilchen besteht und dadurch die Eigenschaften der Batterien verbessert werden und/oder das Feinstkorn für bessere Kontakte zwischen den Teilchen sorgt.

Zur Stabilisierung der Gemische aus teilchenförmigen Zink und einem elektrischen Elektrolyten sind verschiedene Methoden bekannt geworden. So beschreibt beispielsweise die DE-PS-818 519 für Trockenzellenelektroden den Zusatz von Papierfasern und einem Geliermittel. Die DE-AS-25 10 934 beschreibt als Bindemittel wasserunlösliches vernetztes Polyacrylamid und weist daraufhin, dass die früher benutzten Bindemittel wie Natriumcarboxymethylcellulose nicht zu den gewünschten Erfolgt geführt haben.

Aus der JP 10 162 869 ist eine amalgamfreie Zink-Luft Zelle bekannt, die Zinkpulver mit einer Schüttdichte von 2,6-3,1 g/ml in einem Elektrolytverhältnis von 20- 100% verwendet. Die Fließfähigkeit des Gemischer muß jedoch bestehen bleiben und aufgrund der kleineren Oberfläche pro Gewicht von kugel förmigen Teilchen werden diese eingesetzt.

Die Erfindung hat sich die Aufgabe gestellt, Gemische aus Zink- und/oder Zinklegierungsteilchen und einem flüssigen elektrolytischen Medium zur Verfügung zu stellen, die beispielsweise beim Einbau in Batterien und Akkumulatoren optimale Eigenschaften aufweisen bezüglich Leistung, Lebensdauer, Belastbarkeit durch starke Entladungen und mechanische Stöße unter gleichzeitiger Vermeidung der Freisetzung von Gasen.

Diese Aufgabe wird jetzt dadurch gelöst, dass das Volumen des flüssigen elektrolytischen Mediums in etwa den Zwischenräumen zwischen den Teilchen bei trockener Schüttung (zum Beispiel gemäß ASTM-B 212) entspricht, das Gemisch direkten Kontakt zwischen nahezu allen Teilen aufweist, das elektrolytische Medium kein oder nur wenig Gehiermittel enthält und viele Längliche oder Länglich-platte Teilchen vorhanden sind und daher die Teilchen eine Schüttdichte kleiner als 2,8 g/ml aufweisen. Dies ist gleichbedeutend mit der Forderung, dass das Volumen des Gemisches in etwa gleich oder nur wenig größer ist als das Volumen der trockenen Schüttung der Zink- und/oder Zinklegierungsteilchen. In diesen Gemischen ist praktisch gewährleistet, dass ein direkter Kontakt zwischen nahezu allen Teilchen besteht, aber dennoch genügend flüssiges elektrolytisches Medium vorhanden ist, um die Metall- und/oder Legierungsteilchen aufzulösen und dabei Strom zu erzeugen. Nach dem Stand der Technik enthält hingegen das Gemisch ungefähr 50 bis 100% mehr flüssigen Elektrolyten als in die Zwischenräume der Teilchen bei trockener Schüttung passen würde. Demgemäss ist das Volumen derartiger Gemische auch deutlich höher als dem Volumen der Teilchen bei trockener Schüttung entspricht.

Ein möglicher Nachteil der erfindungsgemäßen Gemische ist, dass sie nicht so leicht in üblicher Weise dosierbar sind, da sie weder fließfähig noch rieselfähig sind, sondern eine relativ feste Konsistenz aufweisen. Um diese Gemische herzustellen und dosiert beispielsweise in Batterien einfüllen zu können, ist es daher möglich, zunächst ein Gemisch mit überschüssigen Mengen des elektrolytischen Mediums herzustellen und dafür zu sorgen, dass dieser Überschuss nachträglich nach der Dosierung aus dem Gemisch abfließen kann oder abgesaugt wird. Bei der Herstellung von Batterien auf Basis von Teilchen aus Zink oder Zinklegierungen sowie Mangandioxid, ist dies relativ leicht zu bewerkstelligen, indem man nach der Einbringung des Mangandioxids und der Einführung des Separators, beispielsweise aus Papier oder Fliessen, auf die Befeuchtung des Separators ganz oder teilweise verzichtet und die hierfür verwendete Menge an flüssigem Medium zunächst dazu verwendet, das Gemisch aus Metall- und/oder Legierungsteilchen und dem flüssigen elektrolytischen Medium besser dosierbar zu machen.

Nach dem Einbringen dieses dosierbaren Gemisches wird dann die überschüssige Menge des elektrolytischen Mediums durch den Separator abgesaugt und auch dem Mangandioxid zugeführt. Die fertige Batterie enthält somit durchaus nach bisherigen Methoden hergestellten Batterien vergleichbare Mengen an elektrolytischem Medium. Das Gemisch aus Zink- und/oder Zinklegierungsteilchen enthält hingegen nicht mehr den üblichen Volumenüberschuss an flüssigem elektrolytischen Medium, der bisher so gewählt wurde, dass das Gemisch gut dosierbar war. Das Volumen des flüssigen Mediums passte jedoch nicht in das freie Porenvolumen der Teilchen bei trockener Schüttung.

Um ein nachträgliches Absetzen der Zink und/oder Zinklegierungsteilchen in den elektrolytischen Medien zu verhindern, wurde diesen Gemischen bisher im allgemeinen ein Geliermittel zugegeben. Sowohl das Geliermittel als auch die überschüssige Menge an elektrolytischem Medium können aber die Eigenschaften der fertigen Batterie beeinflussen und bestimmte Eigenschaften sogar verschlechtern. Beispielsweise stehen nicht alle Teilchen in unmittelbarem Kontakt mit anderen Teilchen, so dass keine elektronische Leitfähigkeit zwischen ihnen besteht. Es wächst somit der innere Widerstand der Batterie. Durch den Zusatz von Geliermittel kann die elektrische Leitfähigkeit des elektrolytischen Mediums herabgesetzt werden. Weiterhin sind alle bisher hergestellten Batterien mehr oder weniger empfindlich gegen starke mechanische Stöße und Erschütterungen.

Durch Verwendung der erfindungsgemäßen Gemische, in denen das Volumen des Mediums in etwa den Zwischenräumen zwischen den Teilchen bei trockener Schüttung entspricht, besteht praktisch direkter metallischer Kontakt zwischen nahezu allen Teilchen. Dies vermindert den inneren Widerstand der Batterie und vermindert vor allem auch die Stoßempfindlichkeit.

Da das Gefüge dieser Teilchen relativ stabil ist, kann sogar auf die Verwendung von Geliermittel mehr oder weniger verzichtet werden. Auf alle Fälle kann der Zusatz an Geliermittel erheblich vermindert werden. Gewünschtenfalls können aber auch die bisher üblichen Mengen zugesetzt werden.

Die trockene Schüttung stellt ein noch relativ lockeres Gefüge dar. Durch intensives Rütteln und Schütteln sind derartige trockene Schüttungen durchaus weiter verdichtbar. Da jedoch bei Batterien auch eine ausreichende Menge an flüssigem elektrolytischem Medium notwendig ist, wird die maximal mögliche Verdichtung der Zink- und/oder Zinklegierungsteilchen vermieden. Es wird aber auch der bisher verwendete nicht unerhebliche Volumenüberschuss an flüssigem elektrolytischem Medium vermieden. Erfindungsgemäß werden die Gemische zunächst mit überschüssigen Mengen des elektrolytischen Mediums dosierbar gemacht, dann dosiert und danach von den überschüssigen Mengen an elektrolytischem Medium befreit. Dies erfolgt praktisch durch Absaugen, wobei z.B. diese überflüssige Menge vom Separator und der Kathode aufgenommen wird.

Die Schüttdichte bei trockener Schüttung beispielsweise gemäß ASTM-B 212 ist in erheblichem Maße abhängig von der Korngröße, der Korngrößenverteilung und der äußeren Form der Teilchen. Um einerseits den Vorteil der relativ stabilen Struktur mit metallischen Kontakten der Teilchen untereinander zu erreichen und andererseits ausreichende Mengen an flüssigem elektrolytischem Medium in dem Gemisch unterbringen zu können, empfiehlt es sich bei Verwendung von Zink oder Zinklegierungen Material einzusetzen, welches eine trockene Schüttdichte kleiner als 2,8 g/ml aufweist. Dies ist beispielweise möglich bei Verwendung von Material, welches bedingt durch das Herstellungsverfahren viele längliche oder länglich-platte Teilchen aufweist, da dies zu einer niedrigeren Schüttdichte führt. Dies bedeutet, dass zwischen den Teilchen ein relativ großes Porenvolumen vorhanden ist. Bei Verwendung derartiger Materialien ist es dann durchaus möglich, in der fertigen Batterie eine vergleichbare Gewichtsverteilung zwischen Metallteilchen und flüssigem elektrolytischem Medium herzustellen, wie bei den bisher hergestellten Batterien. Diese Gewichtsmengenverteilung hat sich im Prinzip bewährt und würde daher von den Batterieherstellern nur ungern wesentlich verändert werden. Geändert werden muss erfindungsgemäß auch nicht die Art der Zudosierung der Gemische aus Zink- und/oder Zinklegierungsteilchen und flüssigem elektrolytischem Medium. Geändert werden kann aber die Befeuchtung des Separators mit Tränkelektrolyt. Dieser Schritt kann entweder ganz entfallen oder mit einer deutlich geringeren Menge an Tränkelektrolyt durchgeführt werden, da das erfindungsgemäß verwendete Gemisch aus Zinkund/oder Zinklegierungsteilchen und flüssigem elektrolytischem Medium in der Lage ist, das überschüssige elektrolytische Medium an den Separator und die Kathode abzugeben. Darüber hinaus kann die Herstellung der Batterien in den verschiedenen genormten Größen unverändert weiterbenutzt werden. Beispielsweise können die heutzutage üblichen quecksilberfreien Zinklegierungen zum Einsatz kommen, die wenig gasen aber umweltfreundlich sind. Die erfindungsgemäßen Gemische aus Zink und/oder Zinklegierungsteilchen und einem flüssigen elektrolytischen Medium können aber auch in anderen Typen von Batterien und Akkumulatoren zum Einsatz kommen und auch hierbei neue und vorteilhafte Eigenschaften der Batterien und Akkumulatoren bewirken.

## Patentansprüche

1. Gemisch aus Zink und/oder Zinklegierungsteilchen und einem flüssigen elektrolytischen Medium, **dadurch gekennzeichnet, dass** das Volumen des Mediums in etwa den Zwischenräumen zwischen den Teilchen bei trockener Schüttung entspricht, das Gemisch direkten Kontakt zwischen nahezu allen Teilchen aufweist, das elektrolytische Medium kein oder nur wenig Geliermittel enthält und viele längliche oder länglich-platte Teilchen vorhanden sind und daher die Teilchen eine Schüttdichte kleiner als 2,8 g/ml aufweisen.

2. Gemisch gemäß Anspruch 1, **dadurch gekennzeichnet, dass** das Volumen des Gemisches in etwa gleich oder nur wenig größer ist als das Volumen der trockenen Schüttung der Zink und/oder Zinklegierungsteilchen.

3. Verfahren zur Herstellung des Gemisches gemäß einem der Ansprüche 1 oder 2, **dadurch gekennzeichnet, dass** zunächst ein dosierbares Gemisch mit überschüssigen Mengen des elektrolytischen Mediums hergestellt wird und dieser Überschuss nachträglich nach der Dosierung aus dem Gemisch abgesaugt wird.

## Claims

1. A mixture of zinc and/or zinc alloy particles and a liquid electrolytic medium, **characterized in that** the volume of the medium approximately corresponds to the spaces between the particles in a dry packing, nearly all particles of the mixture contact each other, the electrolytic medium contains no or only a small amount of a gelling agent and many oblong or oblong-prolate particles are present and the particles therefore have a bulk density of lower than 2.8 g/ml.

2. The mixture according to claim 1, **characterized in that** the volume of the mixture is approximately equal to or little larger than the volume of the dry packing of zinc and/or zinc alloy particles.

3. A process for preparing the mixture according to any one of claims 1 or 2, **characterized in that** a dosable mixture with excess amounts of the electrolytic medium is prepared first, which excess is sucked off from the mixture later after the dosing.

## Revendications

1. Mélange de particules de zinc et/ou d'alliages de zinc et d'un milieu électrolytique fluide, **caractérisé en ce que** le volume du milieu correspond à peu près aux interstices entre les particules lors d'un déversement à l'état sec, **en ce que** le mélange présente un contact direct entre presque toutes les particules, **en ce que** le milieu électrolytique ne contient que peu d'agent gélifiant ou pas du tout et **en ce que** de nombreuses particules oblongues ou oblongues et plates sont présentes et par conséquent, les particules présentent une densité en vrac inférieure à 2,8 g/ml.

2. Mélange selon la revendication 1, **caractérisé en ce que** le volume du mélange est à peu près égal à ou seulement à peine plus important que le volume du déversement à l'état sec des particules de zinc et/ou d'alliages de zinc.

3. Procédé pour la production du mélange selon l'une des revendications 1 ou 2, **caractérisé en ce qu'**un mélange dosable avec des quantités excédentaires de milieu électrolytique est d'abord produit et **en ce que** cet excédent est aspiré ultérieurement du mélange après le dosage.
